# EUROPÄISCHE PATENTSCHRIFT

(11) **EP 2 882 604 B1**
(45) Veröffentlichungstag und Bekanntmachung des Hinweises auf die Patenterteilung: **28.12.2016**
(21) Anmeldenummer: 13753830.2
(22) Anmeldetag: 13.08.2013
(51) Int. Cl.: B60K 26/02, B60T 7/06, G05G 1/32, G05G 1/323, B60R 21/02, B60R 21/09

(54) **FAHRZEUGPEDALEINHEIT MIT SOLLBRUCHSTELLE FÜR DEN CRASHFALL**
VEHICLE PEDAL UNIT WITH BREAK POINTS FOR CRASH CASE
PÉDALE DE VÉHICULE AVEC POINTS DE RUPTURE EN CAS DE CHOC

(30) Priorität: 13.08.2012 DE 102012107408
(43) Veröffentlichungstag der Anmeldung: 17.06.2015
(73) Patentinhaber: AB Elektronik GmbH, 59368 Werne (DE)
(72) Erfinder: BLÖCKERT, Jens, 59368 Werne (DE); LAMMERS, Benedikt, 48727 Billerbeck (DE)
(74) Vertreter: Kalkoff & Partner
(86) Internationale Anmeldenummer: PCT/EP2013/066913
(87) Internationale Veröffentlichungsnummer: WO 2014/026990

(56) Entgegenhaltungen:
- DE-A1-102007 008 816
- US-A1- 2010 089 198

## Beschreibung

Die Erfindung betrifft eine Fahrzeugpedaleinheit mit mindestens einem Pedalelement, das gegenüber einem Basiselement schwenkbar angeordnet ist.

Derartige Fahrzeugpedaleinheiten können insbesondere als Bremspedal, Gaspedal oder Kupplungspedal in einem Kfz vorgesehen sein. Dabei hat sich herausgestellt, dass es im Crashfall aufgrund hoher Belastungen zu Beinverletzungen des Fahrers kommen kann. Die mechanischen Einwirkungen auf den Fuß und das Bein des Fahrers werden in der Simulation eines Crashs als Tibia-Index erfasst. Dabei spielt insbesondere die axial in Längsrichtung des Schienbeinknochens wirkende Kraft Fz eine Rolle.

In der DE 10 2008 014 557 ist ein Fußpedal beschrieben mit einer Pedalplatte und einem Haltebock. Der Haltebock umfasst ein federelastisches Element, welches einenends am Haltebock festgelegt ist und anderenends an seinem freien Ende die Pedalplatte trägt. Insbesondere im Fall eines Frontalcrashs minimiert diese Maßnahme die Belastung des Schienbeinknochens.

Die DE 10 2008 046 652 A1 beschreibt ein Fußpedal an Kraftfahrzeugen mit einer Pedalplatte als Trittplatte und einem an der Kraftfahrzeugkarosserie festlegbaren Lagerbock, an dem die Pedalplatte schwenkbar angelenkt ist. Dem Fußpedal ist ein Dämpfungselement zugeordnet, welches bei einem Crashereignis kraftbeaufschlagbar und energieabsorbierend verformbar ist. So wird die in das das Fußpedal betätigende Bein eingeleitete Kraft im Crashfall gemindert.

Die WO 99/059844 beschreibt einen Drehbolzen eines Kraftfahrzeugpedals in Form eines Rohres mit durch ringförmige Nuten gebildeten Sollbruchstellen. Im Bereich der Sollbruchstellen ist jeweils ein verschieblicher Kolben als Verstärkungselement vorgesehen, der in diesem Bereich die Festigkeit sicherstellt. Um im Crashfall eine Versprödung der Drehachse des Kraftfahrzeugpedals zu erreichen, wird der Kolben axial verschoben, so dass die Sollbruchstellen unter der bestehenden Scherbeanspruchung brechen können.

Die DE 10 2007 008 816 A1 beschreibt ein Fußhebelwerk für ein Kraftfahrzeug. Ein Pedalhebel ist schwenkbar an einem Lagerbock gelagert. Der Lagerbock bildet einen Lagerabschnitt und einen Keilabschnitt aus, wobei der Lagerabschnitt und der Keilabschnitt am Fahrzeugaufbau befestigbar sind. Der Keilabschnitt ist mit dem Lagerabschnitt derart verbunden, dass beim Überschreiten eines bestimmten Kraftniveaus der Lagerabschnitt relativ zu dem Keilabschnitt verschiebbar ist. Der Keilabschnitt weist eine zu dem Pedalhebel weisende Keilfläche auf, die geneigt ist, um im Verlauf einer Relativverschiebung zwischen dem Lagerabschnitt und dem Keilabschnitt mit dem Pedalhebel in Eingriff zu gelangen und diesen in Richtung eines Fahrzeugbodens zu drücken. Der Pedalhebel wird im Crashfall kraftfrei und bewegt sich zudem vom Fahrer weg. So kann der Fuß des Fahrers nicht unter dem Pedalhebel eingeklemmt werden oder der Pedalhebel in einer nicht vollständig zurückgezogenen Position verklemmen.

Die US 2010/0089198 A1 beschreibt ein Pedal für ein Fahrzeug. Ein Anbringungsteil zur lösbaren Anordnung eines Pedalarms ist an einem Armaturenträger angeordnet. Der Pedalarm ist mittels einer Welle in einer Wellenöffnung im Anbringungsteil schwenkbar angeordnet.

In der DE 10 2010 046 764 A1 ist eine Pedalanlage für ein Kraftfahrzeug beschrieben, bei der ein Pedal über eine Gelenkverbindung an einem fahrzeugfest angeordneten Fixierelement angelenkt ist. Dabei bildet ein Zwischenelement eine Sollbruchstelle der Gelenkverbindung, wobei das Zwischenelement aus Metall besteht und mindestens eine blättchenförmige Anformung aufweist, die stoffschlüssig im Material des Fixierelements eingebracht ist, so dass die Anformung eine Sollbruchstelle bildet. Bei einem Unfall knickt das Zwischenelement ab, so dass die entstehenden Hebekräfte die Sollbruchstelle aufbrechen und die Bewegung des Pedals von der Bewegung des Fixierelements entkoppelt wird, so dass eine unfallbedingte Rückverschiebung des Pedals in den Fußraum vermieden werden kann.

Die DE 103 06 103 A1 beschreibt die Anordnung eines Fußhebelwerk-Lagerbocks in einem Kraftfahrzeug. Dabei ist eine Lagerbockgrundplatte an einer Stirnwand eines Kraftfahrzeugs befestigt und ein FPM-Bühnenteil ist daran über einen Verbindungsabschnitt angeformt. Auf dem FPM-Bühnenteil ist ein Fahrpedalmodul mit einem Fahrpedal montiert. Das FPM-Bühnenteil ist mit einem Abstand zum benachbarten Wasserkasten-Schließteil angebracht, wobei der gebildete Freiraum mit einem Fangband überbrückt ist. Der Verbindungsabschnitt zwischen der Lagerbockgrundplatte und dem FPM-Bühnenteil weist eine Sollbruchstrebe auf. Bei einem Frontalaufprall wird das Wasserkasten-Schließteil eingebeult, wobei aufgrund des Freiraums keine Einwirkung auf das FPM-Bühnenteil erfolgt. Bei anschließender Verformung der Stirnwand kommt es zum Verbiegen oder zum Bruch am Verbindungsabschnitt, so dass keine oder nur geringe Schubkräfte auf das FPM-Bühnenteil übertragen werden.

Die nicht vorveröffentlichte DE 10 2011 076 474 A1 beschreibt eine Pedalwertgeberanordnung für ein E-Gassystem, bei dem von einem Sensor eine Stellung eines Pedals erfasst wird, das an einem Lager verschwenkbar gelagert ist. An der Karosserie des Kraftfahrzeugs ist ein Lagerteil vorgesehen, an dem das Fahrpedal schwenkbar angeordnet ist, und ein Basishalteteil aus Kunststoff. Das Lagerteil ist als Schlitten mit Gleitschienen ausgebildet, der mit einem oder mehreren Haltestäben an dem Basishalteteil in der Fahrposition befestigt ist. Die Haltestäbe sind einerseits in einer Bohrung an dem Schlitten und zusätzlich in einer Bohrung an dem Basishalteteil angeordnet. Bei einem Unfall bewirken Beschleunigungskräfte, dass die Haltestäbe brechen und dadurch der Schlitten zusammen mit dem Pedal von der Fahrposition in eine erste Unfallposition verschoben wird. Dabei brechen Rippen am Basishalteteil und nehmen einen Teil der Beschleunigungskräfte auf, zudem bewegt sich der Schlitten mit dem Pedal so, dass der Fußraum vergrößert wird.

Alle vorstehenden Dokumente beschreiben den Oberbegriff des Anspruchs 1

Es ist Aufgabe der Erfindung, eine Fahrzeugpedaleinheit anzugeben, mit der auf einfache Weise im gesamten Einsatzbereich eines Fahrzeugpedals die Verletzungsgefahr verringert werden kann.

Diese Aufgabe wird gelöst durch eine Fahrzeugpedaleinheit gemäß Anspruch 1. Abhängige Ansprüche beziehen sich auf vorteilhafte Ausführungsformen der Erfindung. Erfindungsgemäß wird ein Fahrzeugpedalelement vorgeschlagen mit einem Pedalelement, das gegenüber einem Basiselement um eine Schwenkachse schwenkbar ist.

Ein erster der Erfindung zugrundeliegender Gedanke ist, dass im Crashfall eine Einwirkung zwischen Fuß und Fahrzeug-Pedaleinheit nicht unbedingt am Pedalelement erfolgen wird, sondern dass - insbesondere bei einem Gaspedal - besonders eine zu starke Einwirkung des Basiselements auf den Fuß vermieden werden soll. Dementsprechend ist erfindungsgemäß vorgesehen, dass das Basiselement in zwei voneinander im Crashfall lösbare Teile geteilt ist.

Entsprechend umfasst das Basiselement ein erstes und ein zweites Teil, die im Normalbetrieb aneinander fixiert sind, wobei aber bei Einwirkung von Kräften im Crashfall die Fixierung lösbar ist, so dass das erste und zweite Teil gegeneinander beweglich sind. Dabei ist das erste Teil über die Schwenkachse mit dem Pedalelement gekoppelt. Das zweite Teil kann bspw. ein Pedalgehäuse und/oder weitere Elemente der Fahrzeug-Pedaleinheit umfassen, z.B. Rückstellelemente, einen Sensor für die Pedalstellung, Hysterese-Elemente etc.

Ein weiterer der Erfindung zugrundeliegender Gedanke ist die Erkenntnis, dass es mit den im Pedalbereich vorherrschenden Kunststoff-Materialien nicht mit ausreichender Sicherheit möglich ist, an einer Sollbruchstelle in allen Betriebssituationen eine verlässliche Auslösung und/oder einen definierten Energieabbau zu gewährleisten. Innerhalb des für den Kfz-Betrieb maßgeblichen Temperaturintervalls von bspw. -40 bis +85°C ist die Festigkeit von Kunststoffmaterialien stark temperaturabhängig, wobei der Kunststoff bei niedrigen Temperaturen spröde wird und bei hohen Temperaturen starke elastische Verformbarkeit zeigt.

Für die im Normalbetrieb ausreichend feste Verbindung des ersten und zweiten Teils sowie für die Bildung einer Sollbruchstelle, an der im Crashfall die Trennung stattfindet, wird daher erfindungsgemäß ein Koppelelement aus Metall vorgeschlagen. Dieses verbindet das erste und zweite Teil miteinander, so dass im Normalbetrieb ausreichende Festigkeit gegeben ist. Dabei ist an dem Koppelelement aus Metall eine Sollbruchstelle gebildet, die es ermöglicht, dass bei Einwirkung von Kräften im Crashfall das Koppelelement bricht und so die beiden Teile gegeneinander beweglich werden.

Somit erfolgt die Auslösung bei einer definierten einwirkenden Kraft auf eine Sollbruchstelle im metallischen Koppelelement, das innerhalb des für den Betrieb eines Kfz maßgeblichen Temperaturbereichs eine vergleichsweise geringe Änderung der mechanischen Festigkeit aufweist. Bevorzugt erfolgt durch den Bruch an der Sollbruchstelle dabei auch ein erforderliches Maß an Energieabbau, so dass die Crashenergie nicht vollständig auf den Fuß des Fahrers einwirken kann.

Die Erfindung weist somit einerseits den Vorteil auf, dass eine Auslösung und bevorzugt auch ein definierter Energieabbau unabhängig von der Umgebungstemperatur stattfindet. Andererseits wird durch die Anordnung einer Sollbruchstelle in der Kopplung zwischen einem ersten und zweiten Teil des Basiselements die Sicherheitsfunktion dort geschaffen, wo sie auch in den Fällen wirksam wird, in denen der Fuß beim Crash nicht auf dem Pedalelement ruht, sondern bspw. davor im Fußraum des Kfz. So ist es trotz der sehr einfachen und mit wenig Aufwand herzustellenden Konstruktion möglich, die Sicherheit im Crashfall deutlich zu erhöhen.

Erfindungsgemäß ist das Koppelelement von länglicher Form. Hierunter wird im weitesten Sinn eine Form verstanden, die eine mindestens doppelt so große Länge wie Breite aufweist. Bevorzugt ist das Koppelelement stangen- bzw. streifenförmig mit einer Länge, die mindestens dem 5-fachen, weiter bevorzugt mindestens dem 10-fachen des Maßes in der Breite entspricht. Insbesondere kann das Koppelelement als Stange mit rundem Querschnitt oder mit anderer Querschnittform, oder als Blechstreifen ausgebildet sein.

Die Sollbruchstelle ist bevorzugt als Einkerbung gebildet, bspw. als Nut. Im Fall eines flachen Koppelelements ist die Sollbruchstelle bevorzugt als durch Stanzen gebildete Einkerbung vorgesehen, besonders bevorzugt als zwei gegenüberliegende Einkerbungen, bei einer Rundstange bevorzugt als umlaufende Nut. Dabei ist es, wie nachfolgend noch näher erläutert wird, besonders bevorzugt, wenn in einem länglichen Koppelelement zwei im Abstand voneinander gebildete Sollbruchstellen vorgesehen sind.

Als besonders günstig hat es sich erwiesen, den ersten Teil des Basiselements, der über die Schwenkachse mit der Pedalplatte gekoppelt ist, als Schlitten auszuführen, der nach Bruch des Koppelelements gegenüber dem zweiten Teil verschieblich ist. Hierfür kann im Normalbetrieb am zweiten Teil ein Aufnahmeraum vorgesehen sein, den der Schlitten nach der Verschiebung einnehmen kann. So kann bevorzugt das Basiselement zwischen dem ersten und zweiten Teil teleskopartig ineinandergeschoben werden, so dass es weniger Raum einnimmt. Die Aufnahme des Schlittens kann dabei als definierte Verschiebe-Bewegung stattfinden, wobei der Schlitten am zweiten Teil bei der Verschiebe-Bewegung geführt wird. Dadurch kann erreicht werden, dass das Pedalelement trotz Auslösung stets am Basiselement befestigt bleibt.

Während das Koppelelement aus Metall, bevorzugt aus Stahl gebildet ist, sind bevorzugt das Pedalelement sowie das erste und zweite Teil des Basiselements aus Kunststoff gebildet. Besonders bevorzugt ist das Koppelelement mindestens zum Teil sowohl im ersten als auch im zweiten Teil aufgenommen und bewirkt so die Fixierung. Dabei kann es in eine Bohrung bzw. einen Schlitz eingesteckt oder auch in mindestens einem der Teile eingeformt sein.

Das erste Teil des Basiselements, das die Schwenkachse umfasst, an der das Pedalelement schwenkbar angekoppelt ist, weist bevorzugt eine vordere Keilform auf. Nach den Erkenntnissen der Erfinder kann es, wenn der Fuß des Fahrers im Fußraum aufgesetzt ist, besonders an der Vorderkante zur Berührung mit dem Fuß kommen.

Eine besonders günstige Ausführungsform sieht vor, dass eines der Teile - entweder das erste oder das zweite Teil - in Form einer Gabel mit zwei im Abstand angeordneten Zinkenelementen gebildet ist, während am jeweils anderen Teil ein dazwischen angeordnetes Mittelelement gebildet ist. Das Koppelelement verbindet bevorzugt die beiden Teile, indem es in beiden Zinkenelementen und im Mittelelement jeweils aufgenommen, bspw. in eine Bohrung eingesteckt ist. So ist eine für den Normalbetrieb ausreichend feste Verbindung gebildet, bei der zudem eine verschiebliche Führung erreicht werden kann.

In einer Ausführung kann das Pedalelement über eine Koppelstange mit einem Sensor im Basiselement gekoppelt sein, um die Stellung des Pedalelements zu ermitteln. Die Koppelstange kann bspw. durch eine Öffnung in einem Gehäuse des Basiselements hindurch geführt sein.

Gemäß einer Weiterbildung der Erfindung ist dabei vorgesehen, dass die Öffnung einen Durchtrittsbereich zur Aufnahme der Koppelstange im Normalbetrieb und daneben einen erweiterten Durchtrittsbereich aufweist. Bspw. kann die Öffnung langlochförmig gestaltet sein. So kann die Koppelstange im Crashfall - d. h. nach Bewegung des ersten und zweiten Teils gegeneinander - durch den erweiterten Durchtrittsbereich hindurch in das Innere des Gehäuses geführt werden, so dass die Gefahr des Verklemmens der Koppelstange und einer bspw. dann möglichen unkontrollierten Betätigung verringert wird. Zudem kann eine Restfunktion trotz des geänderten Winkels ermöglicht werden. Bevorzugt ist dabei mindestens am erweiterten Durchtrittsbereich ein flexibler Abschluss zur Abdichtung der Öffnung vorgesehen, bspw. eine Membran als Dichtung.

Nachfolgend wird eine Ausführungsform der Erfindung anhand von Zeichnungen näher beschrieben. Dabei zeigen:
- Fig. 1: eine Fahrzeugpedaleinheit in Seitenansicht;
- Fig. 2: eine Explosionsdarstellung der Fahrzeugpedaleinheit aus Fig. 1 in perspektivischer Ansicht;
- Fig. 3: in perspektivischer Ansicht die Unterseite der Fahrzeugpedaleinheit aus Fig. 1, Fig. 2;
- Fig. 4a, 4b: in einer Ansicht von unten ein Basiselement der Fahrzeugpedaleinheit aus Fig. 1 - 3 im Normalfall (Fig. 4a) und nach der Auslösung im Crashfall (Fig. 4b) und
- Fig. 5: in einer perspektivischen, vergrößerten Ansicht eine Öffnung zum Durchtritt einer Koppelstange gemäß einer zweiten, alternativen Ausführungsform.

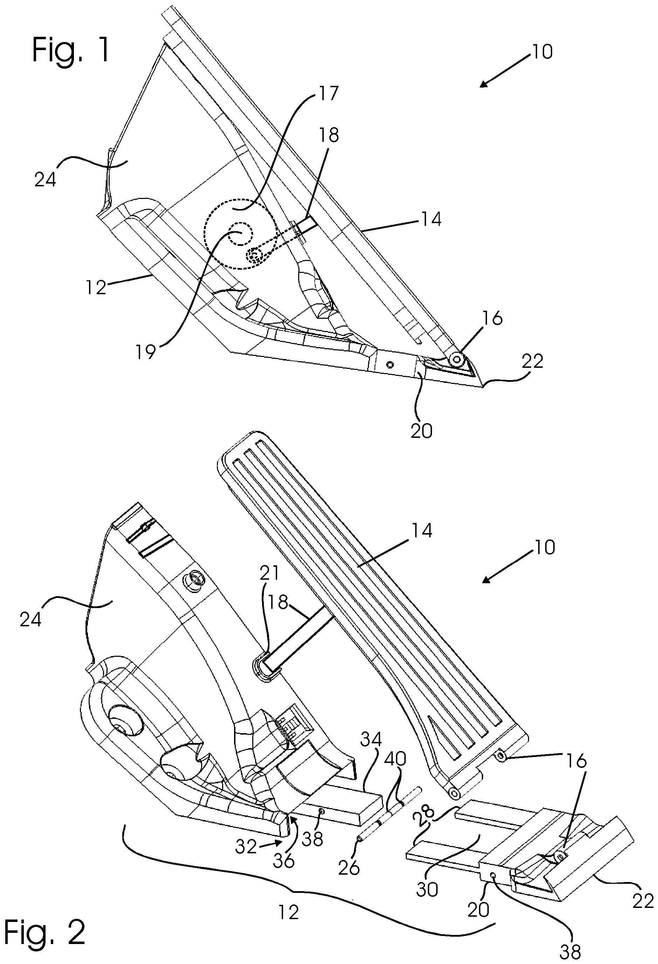

In Fig. 1 ist beispielhaft als Ausführungsform der Erfindung in Seitenansicht eine Fahrzeugpedaleinheit 10 als stehendes Fahrpedal (Gaspedal) eines Kfz gezeigt. Zur festen Anbringung im Fußraum eines Kfz ist ein Basiselement 12 als Gehäuseelement aus Kunststoff vorgesehen. Daran ist ein Gelenk 16 gebildet, an dem ein Pedalelement (Pedalplatte) 14 schwenkbar angeordnet ist. In an sich bekannter Weise ist dabei das Pedalelement 14 zur Fußbetätigung als Gaspedal vorgesehen, wobei die jeweilige Schwenkstellung des Pedalelements 14 gegenüber dem Basiselement 12 in einem Arbeitsbereich zwischen einer ohne äußere Kräfte angenommenen Grundstellung (Leerlauf) und einem unteren Anschlag (Vollgas) variiert werden kann. Das Pedalelement 14 ist dabei über eine Koppelstange 18 mit mechanischen und elektronischen Elementen im Inneren des Basiselements 12 gekoppelt, insbesondere einem Drehelement 17, so dass einerseits die Bewegung des Pedalelements 14 in mechanischer Hinsicht (Begrenzung des Schwenkbereiches, Rückstellung bei nachlassender Betätigung, Dämpfung durch Reibungselemente zur Einstellung der Hysterese) und andererseits die Ankopplung an einen elektrischen Sensor 19 gewährleistet ist, der die jeweilige Stellung des Pedalelements auswertet und als Betätigungswert elektrisch zur Verarbeitung weiterleitet. Derartige Elemente sind dem Fachmann an sich bekannt und werden daher hier nicht näher erläutert.

Die Koppelstange 18 tritt dabei durch eine Öffnung 21 durch die Oberseite des Gehäuseelements 24 hindurch in das Innere des Basiselements 12 ein.

Bei der Bedienung der Fahrpedaleinheit 10 liegt der Fuß des Fahrers vor oder auf dem Pedalelement 14. Im Crashfall, insbesondere bei einem Frontalzusammenstoß, können dabei erhebliche Kräfte auf den Fuß und Unterschenkel des Fahrers einwirken. Um im Crashfall derartige Einwirkungen zu minimieren, ist an der Fahrpedaleinheit 10 eine Sollbruchstelle am Basiselement 12 vorgesehen, so dass sich im Crashfall ein definiertes Verhalten ergibt, wobei Energie absorbiert und somit die Einwirkung von Kräften auf den Fuß des Fahrers verringert wird.

Nach den von den Erfindern angestellten Überlegungen kommt es dabei insbesondere für ein Gaspedal auf die Einwirkung des Basiselements 12 auf den Fuß des Fahrers an, und hier insbesondere von dessen unterem Ende 22. Daher ist das Basiselement 12 an seinem unteren Ende 22 als Schlitten 20 ausgebildet, der ein vom restlichen Basiselement 12, nämlich einem Gehäuseelement 24 separates Teil ist. Dabei sind sowohl der Schlitten 20 als auch das Gehäuseelement 24 als Kunststoffteile vorgesehen, die im normalen Betriebsfall durch ein in beiden Teilen 20, 24 aufgenommenes metallisches Koppelelement, im gezeigten Beispiel eine Koppelachse 26, miteinander verbunden sind.

Der Schlitten 20 weist an seiner vorderen, vom restlichen Basiselement 12 weg weisenden Kante 22 eine Keilform auf. Nach Erkenntnis der Erfinder kann insbesondere diese Kante 22 auf den Fuß des Fahrers einwirken.

Am gegenüberliegenden Ende bildet das Schlittenelement 20 eine Gabel mit zwei parallel im Abstand angeordneten Zinken 28 aus, wobei zwischen den Zinken 28 ein Freiraum 30 gebildet ist.

Passend hierzu weist das Gehäuseelement 24 in einem Aufnahmebereich 32 ein vorstehendes Mittelelement 34 auf, an dessen beiden Seiten Freiräume 36 gebildet sind.

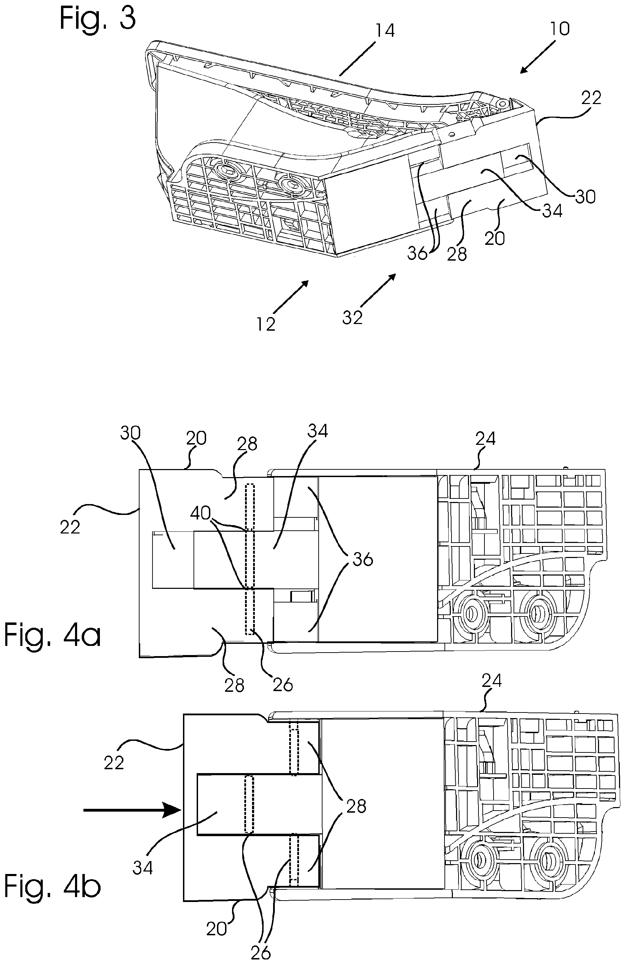

Im für den normalen Betrieb vorgesehenen Grundzustand ist, wie insbesondere aus Fig. 3, Fig. 4a ersichtlich, das Mittelelement 34 des Gehäuseelements 24 im Zwischenraum 30 zwischen den Zinken 28 der Gabel des Schlittens 20 aufgenommen. Somit ist der Schlitten 20 teilweise, aber nicht vollständig in die Freiräume 36 auf beiden Seiten des Mittelelements 34 eingeschoben, und gleichfalls ist das Mittelelement 34 teilweise, aber nicht vollständig im zwischen den Zinken 28 gebildeten Freiraum 30 aufgenommen. Der Schlitten 20 ist so am Aufnahmebereich 32 des zweiten Teils 24 des Basiselements 12 in einer Führung aufgenommen.

In dieser Position ist der Schlitten 20 durch die Koppelachse 26 arretiert, die in fluchtende Bohrungen 38 am Schlitten und am Mittelelement 34 eingeschoben ist. Die Koppelachse 26 wirkt so als Koppelelement zwischen dem ersten Teil (Schlitten 20) und dem zweiten Teil (Gehäuseelement 24) des Basiselements 12, indem sie in beiden Teilen 20, 24 aufgenommen ist. So wird der Schlitten 20 innerhalb der durch die Zinken 28 und das Mittelelement 34 gebildeten Linearführung in seiner Position arretiert.

Das Koppelelement (Koppelachse 26) weist zwei im Abstand voneinander angeordnete Sollbruchstellen 40 auf. Diese sind an der Koppelachse 26 durch umlaufende Rillen gebildet, an denen der Durchmesser der Koppelachse 26 somit verringert ist. Wie aus Fig. 4a ersichtlich sind die Sollbruchstellen 40 am Übergang zwischen den beiden durch die Koppelachse 26 verbundenen Teilen 20, 24 angeordnet, d. h. unmittelbar am Übergang von den Zinken 28 des Schlittens 20 zum Mittelelement 34 des Gehäuseelements 24.

Dabei ist die Koppelachse 26 an den Sollbruchstellen 40 so bemessen, dass die bei üblicher Pedalbetätigung auftretenden Kräfte, die auf den Schlitten 20 einwirken und in der Kopplung des Schlittens 20 an das restliche Basiselement 12 als Scherkräfte von der Koppelachse 26 aufgenommen werden, nicht zum Bruch führen. Aufgrund der über den gesamten Temperaturbereich weitgehend konstanten Materialeigenschaften des hier verwendeten Stahls kann die Auslösekraft, d. h. die einwirkende Kraft, die zu einem Bruch der Koppelachse 26 an den Sollbruchstellen 40 führt, genau eingestellt werden.

Wirkt nun im Crashfall eine deutlich erhöhte Kraft auf den Schlitten 20, bspw. weil das Grundelement 12 mit seiner vorderen Kante 22 gegen den Fuß des Fahrers gestoßen wird, so kommt es zu einem Bruch der Koppelachse 26 an den Sollbruchstellen 40. Der Schlitten 20 ist dann weiterhin durch die gebildete Führung am Gehäuseelement 24 verschieblich geführt, nun aber nicht mehr in seiner Lage arretiert. Unter Einwirkung der Kräfte verschiebt sich der Schlitten 20 wie in Fig. 4b gezeigt in die Aufnahmebereiche 36 am Gehäuseelement 24 hinein, wird also teleskopartig am Gehäuseelement 24 aufgenommen. Dabei führt der Bruch der Koppelachse 26 an den Sollbruchstellen 40 zu einem definierten Energieabbau.

Insgesamt wird durch den beschriebenen Aufbau der Fahrzeugpedaleinheit 10 die Gefahr einer zu starken Einwirkung von Kräften auf den Fuß des Fahrers im Crashfall deutlich verringert. Insbesondere bei der von den Erfindern für relevant gehaltenen Einwirkung der vorderen Kante 22 auf den Fuß des Fahrers verkürzt sich das Basiselement 12 durch die beschriebene teleskopartige Aufnahme des Schlittens 20, wobei gleichzeitig ein Teil der Crashenergie beim Bruch des Achselements 26 abgebaut wird.

Zu den gezeigten und beschriebenen Ausführungen sind eine Anzahl von Varianten möglich. Insbesondere kann das Koppelelement statt wie in der gezeigten Ausführungsform als Rundachse auch als Stift von anderer Querschnittsform, bspw. Vierkantstift etc. ausgebildet sein, oder als flaches Element, insbesondere als Blechstreifen. Ein Blechstreifen ist erheblich kostengünstiger im Stanzverfahren herzustellen als eine Rundachse. Dabei ist die Sollbruchstelle durch eine an beiden Seiten eingestanzte Kerbe gebildet. Der Streifen ist ebenso wie die als Koppelelement im vorangehenden Ausführungsbeispiel gezeigte Rundachse in beiden Teilen des Basiselements aufgenommen, wobei das Streifenmaterial beispielsweise flach in der Verschiebeebene liegen kann oder um 90° hierzu gedreht hochkant gestellt angeordnet sein kann, oder in anderer Orientierung vorgesehen sein kann.

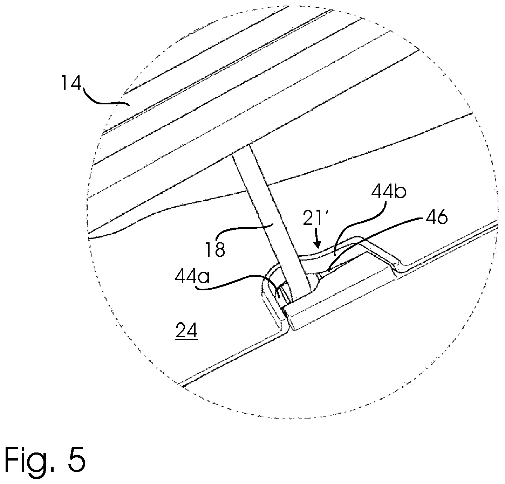

In einer alternativen Ausführungsform ist wie in Fig. 5 dargestellt eine Öffnung 21' des Gehäuseelements 24 des Basiselements 12 so gestaltet, dass der Erhalt der Funktion der Fahrzeugpedaleinheit 1 im Crashfall besser ermöglicht wird.

Im Fall einer runden, die Koppelstange 18 direkt umschließenden Öffnung besteht die Möglichkeit, dass sich im Crashfall die Koppelstange 18 im Material verklemmt.

In der alternativen Ausführungsform gemäß Fig. 5 ist die Öffnung 21' ausgebildet nach Art eines Langlochs, d. h. gegenüber der runden Öffnung 21 erweitert in Richtung der möglichen Verschiebung des Schlittens 20, also in Längsrichtung des Kfz. So ist, zusätzlich zum bereits bei der ersten Ausführung vorhandenen Durchtrittsbereich 44a für den normalen Betriebsfall ein daran anschließender, erweiterter Durchtrittsbereich 44b vorgesehen. Der erweiterte Durchtrittsbereich 44b ist weitgehend durch eine flexible Membran als Dichtung 46 verschlossen, um so das Eindringen von Verunreinigungen möglichst zu vermeiden.

Im Crashfall kommt es zu der bereits beschriebenen Verschiebung des Schlittens 20. Dadurch ändert sich der Eintrittswinkel der Koppelstange 18. Um dennoch - sofern der Grad der Beschädigung des gesamten Fahrzeugs und der Fahrzeugpedaleinheit dies im Übrigen erlauben - eine Restfunktionalität zu ermöglichen, gelangt die Koppelstange 18 durch den veränderten Winkel nun in den erweiterten Durchtrittsbereich 44b. Die Dichtung 46 wird dabei verformt. Dennoch ist die Koppelstange 18 im erweiterten Durchtrittsbereich 44b frei beweglich. So kann auch bei verschobenem Schlitten 20 die Fahrzeugpedaleinheit weiter benutzt werden, bspw. um das Fahrzeug so zu bewegen, dass die Unfallstelle geräumt wird.

## Patentansprüche

1. Fahrzeugpedaleinheit mit
- einem Basiselement (12) und einem Pedalelement (14),
- wobei das Pedalelement (14) schwenkbar am Basiselement (12) angebracht ist,
wobei
- das Basiselement (12) mindestens ein erstes und ein zweites Teil (20, 24) umfasst, wobei das erste Teil (20) über die Schwenkachse (16) mit dem Pedalelement (14) gekoppelt ist, **dadurch gekennzeichnet, dass** das erste und zweite Teil (20, 24) miteinander mittels eines länglichen Koppelelements (26) aus Metall so verbunden sind, dass sie im Normalbetrieb aneinander fixiert sind,
- wobei an dem Koppelelement mindestens eine Sollbruchstelle (40) gebildet ist, so dass bei Einwirkung von Kräften im Crashfall das Koppelelement bricht und das erste und zweite Teil (20, 24) gegeneinander beweglich sind.

2. Fahrzeugpedaleinheit nach Anspruch 1, bei der
- der erste Teil (20) als Schlitten ausgeführt ist, der nach Bruch des Koppelelements (40) gegenüber dem zweiten Teil (24) verschieblich ist.

3. Fahrzeugpedaleinheit nach Anspruch 2, bei der
- am zweiten Teil (24) ein Aufnahmeraum (36) gebildet ist, in den sich der Schlitten (20) verschieben kann.

4. Fahrzeugpedaleinheit nach einem der vorangehenden Ansprüche, bei der
- die Sollbruchstelle als Einkerbung (40) gebildet ist.

5. Fahrzeugpedaleinheit nach einem der vorangehenden Ansprüche, bei der
- das Koppelelement (26) mindestens zum Teil sowohl im ersten als auch im zweiten Teil (20, 24) aufgenommen ist.

6. Fahrzeugpedaleinheit nach einem der vorangehenden Ansprüche, bei der das erste und zweite Teil (20, 24) im Normalbetrieb gekoppelt sind mittels einer Gabel, in der zwischen zwei Zinkenelementen (28) ein Mittelelement (34) aufgenommen ist,
- wobei das Koppelelement (26) in beiden Zinkenelementen (28) und im Mittelelement (34) aufgenommen ist.

7. Fahrzeugpedaleinheit nach einem der vorangehenden Ansprüche, bei der
- das Koppelement als Rundstange (26) ausgebildet ist.

8. Fahrzeugpedaleinheit nach einem der vorangehenden Ansprüche, bei der
- das Koppelelement als Streifen aus Blech ausgebildet ist.

9. Fahrzeugpedaleinheit nach einem der vorangehenden Ansprüche, bei der
- das erste Teil an seiner Spitze (22) keilförmig ausgebildet ist.

10. Fahrzeugpedaleinheit nach einem der vorangehenden Ansprüche, bei der
- das Pedalelement (14) über eine Koppelstange (18) mit einem Sensor (19) im Basiselement gekoppelt ist, um die Stellung des Pedalelements (14) zu ermitteln,
- wobei die Koppelstange (18) durch eine Öffnung (21') in einem Gehäuse (24) hindurch geführt ist,
und wobei die Öffnung (21') einen Durchtritts bereich (44a) zur Aufnahme der Koppelstange (18) im Normalbetrieb und daneben einen erweiterten Durchtrittsbereich (44b) aufweist, so dass die Koppelstange im Crashfall nach Bewegung des ersten und zweiten Teils (20, 24) gegeneinander durch den erweiterten Durchtrittsbereich (44b) hindurchgreift.

11. Fahrzeugpedaleinheit nach Anspruch 10, bei der
- mindestens am erweiterten Durchtrittsbereich (44b) ein flexibler Abschluss (46) zur Abdichtung der Öffnung (21') vorgesehen ist.

## Claims

1. Vehicle pedal unit with
- a base element (12) and a pedal element (14),
- wherein the pedal element (14) is pivotably attached to the base element (12),
wherein
- the base element (12) comprises at least one first and one second part (20, 24), wherein the first part (20) is coupled to the pedal element (14) by means of the pivot axis (16), **characterized in that**
the first and the second part (20, 24) are connected to each other by means of an elongated coupling element (26) consisting of metal such that they are attached to each other in normal operation,
- wherein at least one break point (40) is formed in the coupling element such that the coupling element breaks in the event of a crash under the effect of forces, and the first and second part (20, 24) are movable toward each other.

2. The vehicle pedal unit according to claim 1, wherein
- the first part (20) is designed as a slide which is movable relative to the second part (24) following the breakage of the coupling element (40).

3. The vehicle pedal unit according to claim 2, wherein
- a receiving space (36) is formed in the second part (24) in which the slide (20) can move.

4. The vehicle pedal unit according to one of the preceding claims, wherein
- the break point is formed as a notch (40).

5. The vehicle pedal unit according to one of the preceding claims, wherein
- the coupling element (26) is at least partially accommodated both in the first and in the second part (20, 24).

6. The vehicle pedal unit according to one of the preceding claims, wherein the first and second part (20, 24) are coupled in normal operation by means of a fork in which a middle element (34) is accommodated between two prong elements (28),
- wherein the coupling element (26) is accommodated in both prong elements (28) and in the middle element (34).

7. The vehicle pedal unit according to one of the preceding claims, wherein
- the coupling element is designed as a round rod (26).

8. The vehicle pedal unit according to one of the preceding claims, wherein
- the coupling element is designed as a strip of sheet metal.

9. The vehicle pedal unit according to one of the preceding claims, wherein
- the first part is designed wedge-shaped at its tip (22).

10. The vehicle pedal unit according to one of the preceding claims, wherein
- the pedal element (14) is coupled by means of a coupling rod (18) to a sensor (19) in the base element in order to determine the position of the pedal element (14),
- wherein the coupling rod (18) is guided through an opening (21') in a housing (24),
- and wherein the opening (21') has a passage area (44a) to accommodate the coupling rod (18) in normal operation, and has an extended passage area (44b) adjacent thereto such that the coupling rod extends through the extended passage area (44b) in the event of a crash after the first and second part (20, 24) move.

11. The vehicle pedal unit according to claim 10, wherein
- a flexible closure (46) is provided at least at the extended passage area (44b) to seal the opening (21').

## Revendications

1. Pédale de véhicule avec
- un élément de base (12) et un élément de pédale (14),
- dans lequel l'élément de pédale (14) est fixé de manière pivotante sur l'élément de base (12),
dans lequel
- l'élément de base (12) comprend au moins une première et une deuxième partie (20, 24), dans lequel la première partie (20) est couplée via l'axe de pivotement (16) à l'élément de pédale (14), **caractérisé en ce que** les première et deuxième parties (20, 24) sont raccordées l'une à l'autre au moyen d'un élément de couplage oblong (26) en métal de manière à être fixées l'une à l'autre en cours de fonctionnement normal,
- dans lequel est formé sur l'élément de couplage au moins un point de rupture (40), de manière à ce que, en cas d'exposition à des forces en cas de collision, l'élément de couplage se rompt et les première et deuxième parties (20, 24) sont mobiles l'une contre l'autre.

2. Pédale de véhicule selon la revendication 1, dans lequel
- la première partie (20) est réalisée comme chariot qui, après la rupture de l'élément de couplage (40), est mobile par rapport à la deuxième partie (24).

3. Pédale de véhicule selon la revendication 2, dans lequel
- sur la deuxième partie (24) est formé un espace de logement (36) dans lequel le chariot (20) peut être déplacé.

4. Pédale de véhicule selon l'une quelconque des revendications précédentes, dans lequel
- le point de rupture est formé comme encoche (40).

5. Pédale de véhicule selon l'une quelconque des revendications précédentes, dans lequel
- l'élément de couplage (26) est logé au moins partiellement aussi bien dans la première que dans la deuxième partie (20, 24).

6. Pédale de véhicule selon l'une quelconque des revendications précédentes, dans lequel les première et deuxième parties (20, 24) sont couplées en cours de fonctionnement normal au moyen d'une fourche dans laquelle est logé un élément central (34) entre deux éléments à dents (28),
- dans lequel l'élément de couplage (26) est logé dans les deux éléments à dents (28) et dans l'élément central (34).

7. Pédale de véhicule selon l'une quelconque des revendications précédentes, dans lequel
- l'élément de couplage est formé comme tige ronde (26).

8. Pédale de véhicule selon l'une quelconque des revendications précédentes, dans lequel
- l'élément de couplage est formé comme bande en tôle.

9. Pédale de véhicule selon l'une quelconque des revendications précédentes, dans lequel
- la première partie est en forme de coin à sa pointe (22).

10. Pédale de véhicule selon l'une quelconque des revendications précédentes, dans lequel
- l'élément de pédale (14) est couplé via une tige d'accouplement (18) à un capteur (19) dans l'élément de base afin de déterminer la position de l'élément de pédale (14),
- dans lequel la tige d'accouplement (18) est conduite à travers une ouverture (21') dans un boîtier (24),
- et dans lequel l'ouverture (21') comporte une zone de passage (44a) pour le logement de la tige d'accouplement (18) en cours de fonctionnement normal et, à côté de celle-ci, une zone de passage élargie (44b), de manière à ce que la tige d'accouplement, en cas de collision, prend à travers la zone de passage élargie (44b) après le mouvement de la première et de la deuxième partie (20, 24).

11. Pédale de véhicule selon la revendication 10, dans lequel
- est prévu au moins sur la zone de passage élargie (44b) un embout flexible (46) pour l'étanchement de l'ouverture (21').
